# EUROPÄISCHE PATENTSCHRIFT

(11) **EP 1 093 952 B1**
(45) Veröffentlichungstag und Bekanntmachung des Hinweises auf die Patenterteilung: **02.02.2005**
(21) Anmeldenummer: 00121234.9
(22) Anmeldetag: 02.10.2000
(51) Int. Cl.: B60K 15/04

(54) **Absperrventil für einen Tank**
Shut-off valve for a tank
Soupape d'arrêt d'un réservoir

(30) Priorität: 22.10.1999 DE 19951192
(43) Veröffentlichungstag der Anmeldung: 25.04.2001
(73) Patentinhaber: Volkswagen Aktiengesellschaft, 38436 Wolfsburg (DE)
(72) Erfinder: Kraft, Burkhard, Dipl.-Ing., 38550 Isenbüttel (DE)

(56) Entgegenhaltungen:
- WO-A-95/12545
- FR-A- 2 312 707
- US-A- 5 687 762

## Beschreibung

Die Erfindung betrifft ein Absperrventil für einen Tank.

Sie eignet sich besonders zur Verwendung im Zusammenhang mit einem Kraftstofftank für ein Kraftfahrzeug, wobei das Absperrventil in einem in den Tank führenden Befüllweg angeordnet ist. Die Erfindung kann jedoch auch bei anderen Tankanlagen eingesetzt werden, um eine Überbefüllung eines Tanks zu vermeiden.

Im Zuge der Bemühungen um eine Verbesserung des Schutzes der Umwelt besteht ein großes Interesse daran, das Austreten von in einem Tank befindlichen gasförmigen Phasen zu verhindern. Andererseits ist es oftmals erforderlich, das Entstehen eines Überdruckes in dem Tank zu vermeiden, der beispielsweise durch eine Erwärmung des in dem Tank befindlichen Mediums oder durch äußere Wärmezufuhr entstehen kann. Zum Abbau des Überdruckes werden Entlüftungsvorrichtungen vorgesehen, die zur Vermeidung des Entweichens gesundheitsschädlicher Komponenten mit entsprechenden Filtern ausgerüstet sind. Diese Entlüftungsvorrichtungen lassen in der Regel nur einen langsamen, quasistatischen Druckausgleich zu.

Tanks, deren Inhalt mit der Zeit verbraucht wird, müssen in zeitlichen Abständen wieder befüllt werden, wozu insbesondere bei Kraftfahrzeugtanks lediglich ein zeitweiliger Anschluß an eine Füllleitung erfolgt. Beim Wiederbefüllen muß der Tank geöffnet werden, wobei es zu einem Austreten von in dem Tank befindlichen Gase an der Einfüllöffnung kommen kann. Im Stand der Technik, beispielsweise in der DE 198 02 078 A1 wird daher die Einfüllöffnung mit einer selbsttätig schließenden Rückschlagklappe versehen, die bei einem Entfernen der Füllleitung, beispielsweise nach einem Herausziehen einer Zapfpistole aus einer Tankeinfüllöffnung, den Tank sofort wieder verschließt. Während des Befüllens können jedoch in dem Tank befindliche Gase nach außen dringen. Dem wird bisweilen durch auf Seiten einer Abfüllvorrichtung vorgesehene Absaugeinrichtungen begegnet, welche die entweichenden Gase auffangen.

Während des Befüllens muß weiterhin dafür gesorgt werden, daß ein Überbefüllen des Tanks vermieden wird. Eine übliche Technik besteht darin, daß die Abfüllvorrichtung bei einem plötzlichen Anstieg des Fördergegendruckes, der beispielsweise bei einem Eintauchen der Mündungsöffnung einer Zapfpistole in die Füllstandsoberfläche eines Tanks bzw. eines Tankeinfüllstutzens auftritt, automatisch abschaltet. In der bereits erwähnten DE 198 02 078 A1 ist der Tankeinfüllstutzen zu dem eigentlichen Tank hin verjüngt ausgebildet, um bei Erreichen eines maximalen Füllstandes in dem Stutzen einen zeitweiligen Rückstau verursachen, der ein Abschalten der Abfüllvorrichtung veranlaßt. Die sich verjüngende Ausbildung des Tankeinfüllstutzens verlängert die zum Befüllen des Tanks erforderliche Zeit. Überdies ist der Zeitpunkt der Abschaltung von einer Vielzahl von Einflußparametern abhängig, so daß zur Vermeidung einer Überbefüllung der Tankeinfüllstutzen auf ein frühzeitiges Abschalten ausgelegt wird. Zu diesem Zeitpunkt aber ist der Tank meist nicht vollständig gefüllt, so daß Nachfüllvorgänge notwendig werden, die bei herkömmlichen Zapfpistolen manuell ausgeführt werden müssen und die Befüllungszeit weiter verlängern.

Der Erfindung liegt demgegenüber die Aufgabe zugrunde, ein Absperrventil für einen Tank zu schaffen, das neben einer hohen Dichtigkeit im geschlossenen Zustand ein schnelles, vollständiges Befüllen des Tanks erlaubt.

Diese Aufgabe wird gelöst durch ein Absperrventil für einen Tank, umfassend ein Einfüllrohr mit einem einfüllseitigen Ventilsitz und einem tankseitigen Ventilsitz, die in Durchströmrichtung des Einfüllrohres voneinander beabstandet angeordnet sind, einen Ventilkörper mit einem Dichtelement, der zwischen den Ventilsitzen bewegbar angeordnet ist, um je nach Stellung des Ventilkörpers gegen den einen oder den anderen Ventilsitz anzuliegen, wobei der Ventilkörper in Richtung des einfüllseitigen Ventilsitzes vorgespannt ist, um in einer Ruhestellung das Einfüllrohr gegen den einfüllseitigen Ventilsitz abzudichten, und wobei die Vorspannung des Ventilkörpers durch den Strömungsdruck eines einzufüllenden Mediums in Richtung des tankseitigen Ventilsitzes überwindbar eingestellt ist, und eine füllstandsgesteuerte Anschlageinrichtung zum Anhalten der Bewegung des Ventilkörpers in Richtung des tankseitigen Ventilsitzes in einer Stellung, in welcher das Dichtelement von dem einzufüllenden Medium umströmbar von den Ventilsitzen beabstandet gehalten ist, wobei die Anschlagwirkung der Anschlageinrichtung bei Erreichen einer vorgegebenen Füllstandshöhe in dem Tank aufgehoben wird.

Die erfindungsgemäße Lösung vereint eine hohe Dichtigkeit mit einer präzisen Abschaltung eines Befüllungsvorganges bei Erreichen eines vorgegebenen Füllstandes in dem Tank, so daß lästige Nachtankvorgänge entfallen können. Durch das Schließen des Ventilkörpers bei Erreichen des Füllstandes wird ein Fördergegendruck verursacht, der zu einem Abschalten der Abfüllvorrichtung führt. Da das Schließen des Ventilkörpers unmittelbar von dem Füllstand in dem Tank abhängig ist, werden dynamische Effekte zwischen dem Tankeinfüllstutzen und dem eigentlichen Tank ausgeschaltet. Insbesondere ist es in diesem Fall nicht mehr notwendig, den Tankeinfüllstutzen mit einem sich in Richtung auf den Tank verjüngenden Querschnitt auszubilden, so daß die erfindungsgemäße Absperrvorrichtung zudem einen breiteren Tankeinfüllstutzen und damit ein schnelles Befüllen erlaubt.

Durch die Vorspannung des Ventilkörpers wird in der Ruhestellung des Absperrventils eine Abdichtung des Tanks zur Umgebung hin dauerhaft gewährleistet. Andererseits kann ein Befüllen ohne weitere Maßnahmen an dem Ventil ausgeführt werden, da dieses bereits bei Anliegen des Strömungsdruckes der Abfüllvorrichtung öffnet. Wird bei einem Befüllvorgang der maximale Füllstand nicht erreicht, so ist gewährleistet, daß nach einem Beendigen des Befüllvorganges der Ventilkörper unmittelbar in die Ruhestellung zurückkehrt, um den Tank nach außen dicht abzuschließen.

Das Dichtelement kann integral mit dem Ventilkörper ausgebildet oder als separates Element an diesem angebracht werden.

In einer vorteilhaften Ausgestaltung der Erfindung sind die Ventilsitze an Innenwandabschnitten des Einfüllrohres ausgebildet, deren Innenweite bzw. Durchmesser größer ist, als die Innenweite bzw. der Innendurchmesser einer Durchströmöffnung des Einfüllrohres. Damit bleibt für das Befüllen eine große Innenweite an dem Einfüllrohr erhalten. Der Strömungswiderstand des Einfüllrohres kann damit gering gehalten werden, so daß ein Befüllungsvorgang insbesondere auch bei höheren Temperaturen schnell und ohne Unterbrechung durchgeführt werden kann.

Vorzugsweise sind die Ventilsitze als gegenüber der Durchströmrichtung geneigte Wandabschnitte ausgebildet. Hierdurch läßt sich eine Selbstzentrierung des Dichtelementes in bezug auf die Ventilsitze verwirklichen. Überdies wird ein guter Ablauf von Restmengen des Befüllungsmediums im Bereich der Ventilsitze in Richtung des Tanks erzielt.

In einer weiteren, vorteilhaften Ausgestaltung ist die Außenweite bzw. der Außendurchmesser des Dichtelementes kleiner als die Innenweite bzw. der Innendurchmesser eines zwischen den Ventilsitzen angeordneten, erweiterten Rohrabschnittes, jedoch größer, als die Innenweite bzw. der Innendurchmesser der Durchströmöffnung des Einfüllrohres. Durch den erweiterten Rohrabschnitt wird der Strömungswiderstand des Einfüllrohres im Bereich des Ventilkörpers gering gehalten, so daß es selbst bei größeren Fördermengen der Abfüllvorrichtung nicht zu einem vorzeitigen Abschalten kommen kann. Die Querschnitte der Rohrabschnitte sind dabei nicht notwendigerweise rund, sondern können auch andere Profilformen aufweisen.

Zur Verringerung der Masse des Ventilkörpers ist dieser als Hohlkolben ausgebildet. Damit kann eine Rückstellung des Ventilkörpers in die Ruheposition bereits mit geringen Federkräften erfolgen. Dies erlaubt wiederum ein Befüllen auch bereits mit geringen Förderdrücken.

Der Strömungswiderstand des Ventilkörpers läßt sich weiter verringern, wenn gemäß einer weiteren, bevorzugten Ausgestaltung der Ventilkörper an seiner zu dem einfüllseitigen Ventilsitz weisenden Stirnseite als sich in Richtung des einfüllseitigen Ventilsitzes verjüngende Auswölbung ausgebildet ist.

In einer konstruktiv besonders einfachen Ausführungsform, die lediglich eine geringe Anzahl von Bauteilen aufweist, ist der Ventilkörper an einem Innenwandabschnitt des Einfüllrohres gleitbewegbar geführt. Das Befüllmedium wirkt hierbei als Schmierstoff, wodurch sich eine besonders leichtgängige Lagerung des Ventilkörpers ergibt, so daß die Rückstellkräfte zum Abdichten des Tanks gering gehalten werden können bzw. sich der Ventilkörper leicht durch den Strömungsdruck in eine Abschaltstellung bewegen läßt, in der das Dichtelement gegen den tankseitigen Ventilsitz zur Anlage kommt.

Vorzugsweise ist der Ventilkörper über eine Feder gegen die Innenwand des Einfüllrohres abgestützt, deren Vorspannung derart eingestellt ist, daß der Ventilkörper selbsttätig mit seinem Dichtelement abdichtend gegen den einfüllseitigen Ventilsitz gedrückt wird, die Dichtung jedoch durch den Strömungsdruck eines einzufüllenden Mediums aufhebbar ist.

In einer weiteren, vorteilhaften Ausgestaltung der Erfindung ist der Raum zwischen den Ventilsitzen mit einem Abschnitt des Einfüllrohres und/oder des Tanks stromab des tankseitigen Ventilsitzes über eine bei Anlage des Dichtelementes an den tankseitigen Ventilsitz wirksame Überströmleitung verbunden, die eine definierte Drosselstelle für einen langsamen Druckausgleich aufweist. Damit kann nach einem Schließen des Ventilkörpers gegen den tankseitigen Ventilsitz in dem Einfüllrohr stromab des tankseitigen Ventilsitzes befindliches Medium langsam in den Tank ablaufen, bis der Ventilkörper infolge der Rückstellung wieder gegen den einfüllseitigen Ventilsitz zur Anlage gebracht wird.

Eine räumlich kompakte wie auch robuste und störungsunanfällige Konstruktion ergibt sich durch die Ausgestaltung der Anschlageinrichtung mit einem verlagerbaren Anschlagvorsprung zum Anhalten der Bewegung des Ventilkörpers, der in einem Rohrabschnitt des Einfüllrohres zwischen dem tankseitigen Ventilsitz und dem Tank angeordnet ist, gegen den ein Abstützelement des Ventilkörpers in einer angehaltenen Stellung anliegt und der mit einem Füllstandsignalgeber gekoppelt ist, wobei der Anschlagvorsprung in Abhängigkeit des Füllstandsignalgebers bei Erreichen einer vorgegebenen Füllstandshöhe in dem Tank aus seiner Anschlagstellung bewegt wird, um einen weiteren Verschiebungsweg für das Abstützelement des Ventilkörpers freizugeben. Als Füllstandsignalgeber kann beispielsweise ein in dem Tank angeordneter Schwimmer verwendet werden, der bei Erreichen eines bestimmten Füllstandes ein mechanisches oder elektrisches Signal erzeugt, das in ein Stellsignal für den Anschlagvorsprung umgesetzt wird. Dies kann beispielsweise über ein mechanisches Gestänge erfolgen, das den Schwimmer mit der Anschlageinrichtung verbindet. Anstelle des mechanischen Gestänges kann auch ein elektrisches Stellglied zur Bestätigung der Anschlageinrichtung verwendet werden.

Vorzugsweise umfaßt die Anschlageinrichtung eine Klappe, die um eine Achse quer zu Durchströmrichtung schwenkbar ist, und die eine Öffnung aufweist, die bei einem Verlagern des Anschlagvorsprunges infolge des Erreichens einer vorgegebenen Füllstandshöhe in dem Tank in die Position des Anschlagvorsprunges schwenkbar ist. Damit kann in konstruktiv besonders einfacher Art und Weise das Abschalten bei Erreichen der Füllstandshöhe bewirkt werden. Während des Befüllvorganges bleibt das Abstützelement des Ventilkörpers solange an dem Anschlagvorsprung abgestützt, bis dieser infolge eines Verschwenken aus seiner Stützposition bewegt wird. An deren Stelle tritt die Öffnung, durch die das Abstützelement des Ventilkörpers hindurchdringt, so daß dieses weiter in Richtung des Tanks bewegt wird, womit das Dichtelement des Ventilkörpers gegen den tankseitigen Ventilsitz zur Anlage gelangt und die Abschaltung der Abfüllvorrichtung veranlaßt.

Zur Vereinfachung der Herstellung ist die Klappe der Anschlageinrichtung als plattenartiges Element, beispielsweise als Blechelement, mit einem um die Querachse gebogenen Randabschnitt als Anschlagvorsprung ausgebildet, gegen den das Abstützelement des Ventilkörpers an einer Abstützfläche seitlich in Anlage bringbar ist. Die Öffnung an dem plattenartigen Element schließt an den Anschlagvorsprung an, um bei einem Verschwenken des plattenartigen Elements um die Querachse in die Position der Abstützfläche zu gelangen, wobei die Öffnung größer ist, als die Abstützfläche. Das plattenartige Element kann beispielsweise als einfaches Blechbiegeteil hergestellt werden.

Die Erfindung wird nachfolgend anhand eines in der Zeichnung dargestellten Ausführungsbeispiels näher erläutert. Die Zeichnung zeigt in
- Figur 1: einen Längsschnitt durch ein Absperrventil für einen Kraftstofftankbehälter eines Kraftfahrzeuges in einer Ruhestellung, in der der Kraftstofftank zur Umgebung hin abgedichtet ist,
- Figur 2: einen Längsschnitt entsprechend Figur 1 während eines Befüllungsvorganges, und in
- Figur 3: einen Längsschnitt entsprechend Figur 1 zur Veranschaulichung des Abschaltens eines Befüllungsvorganges.

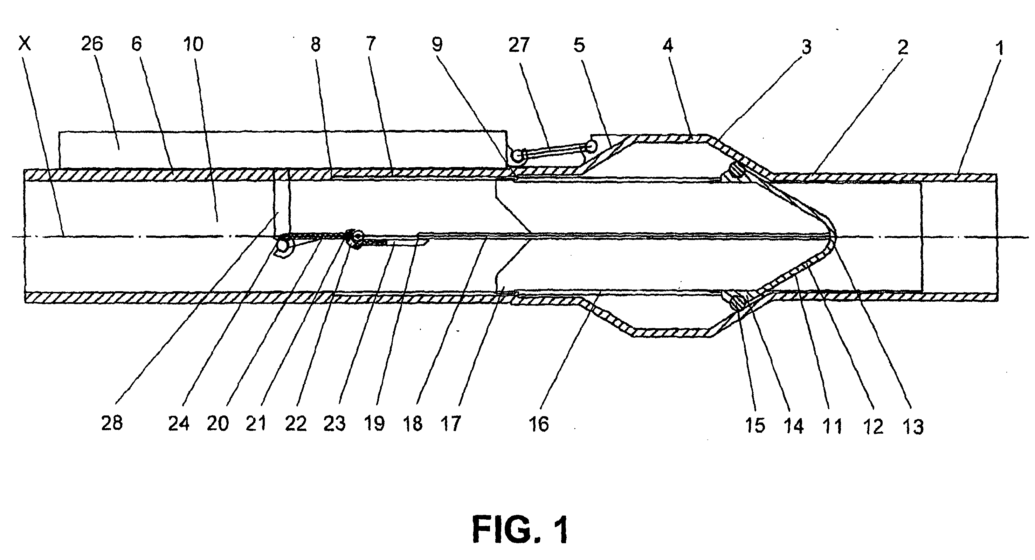

Das Ausführungsbeispiel zeigt ein Absperrventil für einen Kraftstofftank eines Kraftfahrzeuges, das in einem Tankeinfüllstutzen angeordnet ist. Figur 1 zeigt das Absperrventil in einer Ruhestellung, in der das Absperrventil einen in der Figur nicht dargestellten Tank zur Umgebung hin abdichtet, um das Entweichen von gasförmigen Stoffen, die sich über dem Tankinhalt bilden, zu vermeiden.

Das Absperrventil umfaßt ein Einfüllrohr 1, das in Figur 1 auf seiner rechten Seite eine Einfüllöffnung aufweist, über die bei einem Befüllungsvorgang Kraftstoff eingeleitet und über eine in dem Einfüllrohr 1 ausgebildete Durchgangsöffnung 10 einem weiteren Abschnitt des Tankeinfüllstutzens bzw. dem Tank zugeführt wird. Von der Einfüllöffnung leitet ein erster Rohrabschnitt 2 mit einem im wesentlichen konstanten Querschnitt zu einem erweiterten Rohrabschnitt 4 mit einer größeren Innenweite über, an den sich ein zweiter Rohrabschnitt 6 anschließt, dessen Innenweite im wesentlichen der des ersten Rohrabschnittes 2 entspricht. Der erweiterte Rohrabschnitt 4 ist dabei jeweils über einen zu der Längsmittelachse X der Durchgangsöffnung 10 geneigten Wandabschnitt 3 bzw. 5 mit dem ersten Rohrabschnitt 2 bzw. dem zweiten Rohrabschnitt 6 verbunden. In dem dargestellten Ausführungsbeispiel weisen die Rohrabschnitte 2 bis 6 jeweils ein kreisförmiges Innenprofil auf, so daß die geneigten Wandabschnitte 3 bzw. 5 jeweils konische Ventilsitze für einen im folgenden noch näher zu erläuternden Ventilkörper 11 bilden.

Die Innenwand des zweiten Rohrabschnittes 6 weist einen an den tankseitigen geneigten Wandabschnitt 5 unmittelbar anschließenden Innenabsatz auf, der in Richtung des Tanks in einer Stufe 9 endet, die als Anschlag für eine Federabstützung des Ventilkörpers 11 dient. Weiterhin sind an der Innenwand des zweiten Rohrabschnittes 6 Führungsnuten 7 mit jeweils einem tankseitigen Begrenzungsanschlag 8 vorgesehen, in die Abschnitte des Ventilkörpers 11 in Richtung der Längsmittelachse X gleitbewegbar eingreifen.

Der Ventilkörper 11 ist als Hohlzylinder mit einer sich in Richtung der Einfüllöffnung verjüngenden Hervorwölbung 12 ausgebildet, die an einem stirnseitigen Frontende 13 abgerundet ist. In dem dargestellten Ausführungsbeispiel ist die Hervorwölbung 12 konzentrisch zu der Längsmittelachse X angeordnet. Weiterhin umfaßt der Ventilkörper 11 einen radialen Ringabschnitt 14, der rückseitig an die Hervorwölbung 12 anschließt und in den erweiterten Raum des erweiterten Rohrabschnittes 4 hineinragt. Der Ringabschnitt 14 trägt auf seiner radialen Außenseite ein elastisches Dichtelement 15, beispielsweise einen O-Ring, das je nach Stellung des Ventilkörpers 11 mit dem einfüllseitigen Ventilsitz 3 oder dem tankseitigen Ventilsitz 5 in Anlage gebracht werden kann. In der in Figur 1 dargestellten Ruhestellung befindet sich das Dichtelement 15 in Anlage gegen den einfüllseitigen Ventilsitz 3. An dem Ventilkörper 11 ist rückseitig eine flügelartige Führungsanordnung vorgesehen, die beispielsweise durch zwei mittig gekreuzte Platten gebildet wird. Diese Führungsanordnung umfaßt radiale Führungsvorsprünge 17, die in den Führungsnuten 7 des Einfüllrohres 1 gleiten und somit dieses gegen ein Verdrehen in dem Einfüllrohr 1 sichern.

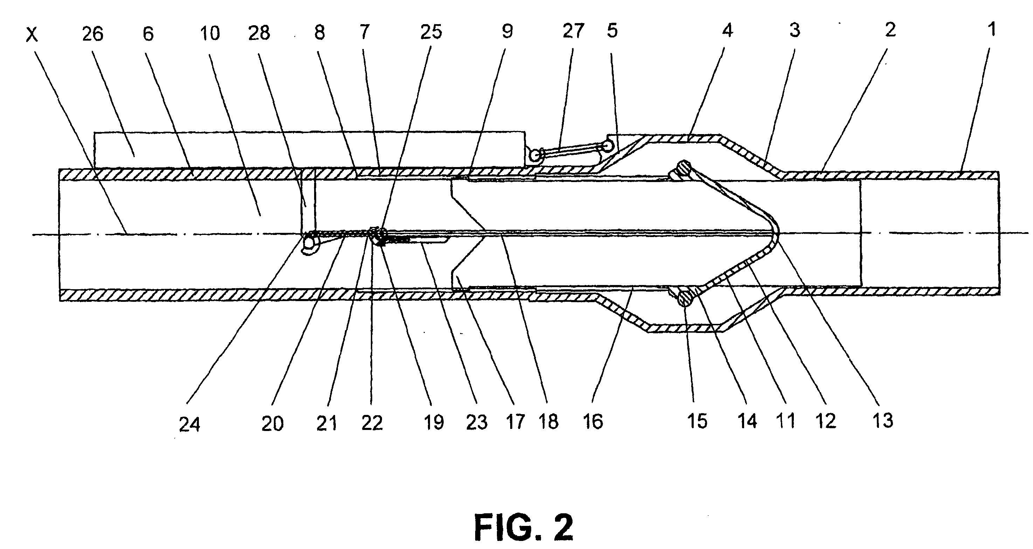

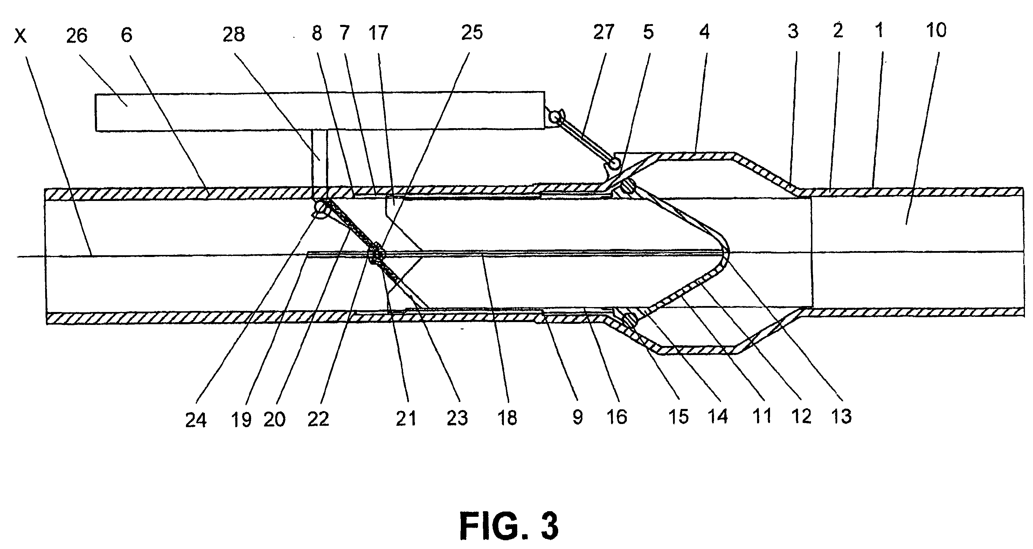

Der Ventilkörper 11 ist rückseitig über eine Feder 16 gegen die Stufe 9 des Einfüllrohres 1 abgestützt. Dabei ist die Vorspannung der Feder 16 derart eingestellt, daß der Ventilkörper 11 mit seinem Dichtelement 15 abdichtend gegen den einfüllseitigen Ventilsitz 3 gedrückt wird. Wie aus den Figuren 2 und 3 zu erkennen ist, kann der Ventilkörper 11 in Richtung des Tanks verschoben werden, wobei die Feder 16 komprimiert wird. Dieses Verschieben wird bei einem Befüllen des Tanks erforderlich. Aus diesem Grunde ist die Vorspannung der Feder 16 derart gewählt, daß die Dichtung durch den Strömungsdruck eines einzufüllenden Mediums, wie er durch herkömmliche Abfüllvorrichtung bereitgestellt wird, aufgehoben werden kann.

Das Absperrventil umfaßt weiterhin eine füllstandsgesteuerte Anschlageinrichtung 20 zum Anhalten der Bewegung des Ventilkörpers 11 in Richtung des tankseitigen Ventilsitzes 5, so daß während eines Befüllungsvorganges das Dichtelement 15 des Ventilkörpers 11 zunächst nicht in Anlage gegen den tankseitigen Ventilsitz 5 gelangt, sondern wie in Figur 2 dargestellt, in einer Mittelstellung zwischen den Ventilsitz 3 und 5 verharrt, in der der Ventilkörper 11 von dem einzufüllenden Medium umströmt wird. Das einzufüllenden Medium drückt dabei auf die Stirnseite, d. h. die Hervorwölbung 12 des Ventilkörpers 11 und wird von dieser in Richtung des erweiterten Raums des erweiterten Rohrabschnittes 4 abgelenkt, um von dort an der Rückseite des Ventilkörpers 11 vorbei durch den zweiten Rohrabschnitt 6 zu dem Tank zu strömen. Die in dem zweiten Rohrabschnitt 6 angeordnete Anschlageinrichtung 20 stellt hierbei kein wesentliches Strömungshindernis dar, da diese sich während des Befüllungsvorganges mit ihren Elementen im wesentlichen in Richtung der Längsmittelachse X erstreckt.

Die füllstandsgesteuerte Anschlageinrichtung 20 ist derart ausgebildet, daß bei Erreichen einer vorgegebenen Füllstandshöhe in dem Tank die Anschlagwirkung gegen den Ventilkörper 11 aufgehoben wird, so daß dieser durch den Strömungsdruck aus der in Figur 2 dargestellten Stellung mit dem zwischen den Ventilsitzen 3 und 5 angeordneten Dichtelement 15 in die in Figur 3 dargestellte Abschaltstellung bewegt wird, in der das Dichtelement 15 gegen den tankseitigen Ventilsitz 5 anliegt.

Wie aus dem Gesamtzusammenhang der Figur 1 bis 3 zu erkennen ist, umfaßt die Anschlageinrichtung 20 eine Klappe, die in dem zweiten Rohrabschnitt 6 um eine Achse 25 quer zur Längsmittelachserichtung X schwenkbar gelagert ist. In dem dargestellten Ausführungsbeispiel wird die Klappe von einem Füllstandssignalgeber betätigt, der hier als in dem Tank angeordneter Schwimmkörper 26 ausgebildet und in den Figuren schematisch dargestellt ist. Dieser Schwimmkörper 26 ist über ein Doppelgelenk-Gestänge 27 an einem Gehäuseabschnitt angekoppelt und über eine in den zweiten Rohrabschnitt 6 hineinragende Betätigungsstange 28 mit der Anschlageinrichtung 20 gekoppelt. Bei Erreichen einer vorgegebenen Füllstandshöhe in dem Tank schwimmt der Körper 26 auf, wobei diese Bewegung über die Betätigungsstange 28 auf die Anschlageinrichtung 20 übertragen wird, um deren Anschlagwirkung aufzuheben. Die Betätigungsstange 28 greift an einem außeraxialen Befestigungsabschnitt 24 der Klappe an, so daß sich in bezug auf die Querachse 25 ein langer Hebelarm ergibt, somit bereits geringe Stellkräfte zum Verschwenken der Klappe ausreichen. Anstelle eines Schwimmkörpers und einer mechanischen Betätigungsstange 28 kann alternativ eine in den Figuren nicht dargestellte sensorische Erfassung der Füllstandshöhe erfolgen, beispielsweise indem ein Füllstandssensor bei Erreichen einer bestimmten Füllstandshöhe anspricht und eine elektrische Bestätigungseinrichtung veranlaßt, die Klappe der Anschlageinrichtung 20 zu verschwenken.

Die Klappe der Anschlageinrichtung 20 umfaßt einen Anschlagvorsprung 21, der um die Querachse 25 gebogen ist. In der in Figur 2 gezeigten Befüllungsstellung liegt der Ventilkörper 11 mit einem sich rückseitig erstreckenden Abstützelement 18, das beispielsweise stabartig oder plattenartig ausgebildet ist, seitlich gegen eine Abstützfläche des Anschlagvorsprunges 21 an. Wie den Figuren 1 und 2 zu entnehmen ist, erstreckt sich die Klappe der Anschlageinrichtung 20 in der Ruhestellung sowie beim Befüllen im wesentlichen in Richtung der Längsmittelachse X, so daß der freie Strömungsdurchmesser der Durchgangsöffnung 10 durch diese nur geringfügig beschränkt wird. Lediglich der Anschlagvorsprung 21 erstreckt sich senkrecht zu der Durchströmrichtung.

An der Klappe ist weiterhin eine Öffnung 22 vorgesehen, die bei die bei einem Verlagern des Anschlagvorsprunges 21 infolge des Erreichens einer vorgegebenen Füllstandshöhe in dem Tank in die Position des Anschlagvorsprunges 21 geschwenkt wird. Da die Öffnung 22 größer ausgebildet ist, als die Anschlagfläche 19 des Abstützelementes 18, kann letzteres, verursacht durch den an dem Ventilkörper 11 angreifenden Strömungsdruck, durch die Öffnung 22 hindurchdringen, so daß für den Ventilkörper 11 ein weiterer Verschiebungsweg freigegeben wird, der es dem Ventilkörper 11 ermöglicht, den zweiten Rohrabschnitt 6 gegen den tankseitigen Ventilsitz 5 abzuschließen. Der hiermit schlagartig aufgebaute Strömungsgegendruck bewirkt ein sofortiges Abschalten der Abfüllvorrichtung. Dieser Zustand ist in Figur 3 bildlich dargestellt, bei dem die Klappe der Anschlageinrichtung 20 maximal verschwenkt ist.

Um in diesem Zustand ein Ablaufen des in dem zweiten Rohrabschnitt 6 befindlichen Befüllungsmediums zu ermöglichen und eine Rückkehr des Ventilkörpers 11 in die in Figur 1 dargestellte Ruhestellung zu bewirken, ist ein Druckausgleich zwischen der Vorderseite und der Rückseite des Ventilkörpers 11 erforderlich. Hierzu ist der Raum zwischen den Ventilsitzen 3 und 5 mit dem Tank oder dem zweiten Rohrabschnitt 6 über eine in den Figuren nicht dargestellte Überströmleitung verbunden, die eine definierte Drosselstelle für einen langsamen Druckausgleich aufweist. Diese Überströmleitung ist zumindest bei Anlage des Dichtelementes 15 an den tankseitigen Ventilsitz 5 wirksam und kann beispielsweise durch einen die Dichtung überbrückenden Kanal gebildet werden, der als Nut in dem tankseitigen Ventilsitz 5 vorgesehen wird. Da bei einem gefüllten Tank die Anschlageinrichtung 20 in der in Figur 3 dargestellten Position mit schräg angestellter Klappe verbleibt, ist in dieser einer Ablaufausnehmung 23 vorgesehen, um ein Absperren von Medium in dem Raum zwischen der Klappe und dem tankseitigen Ventilsitz 5 zu vermeiden.

Mit dem Druckausgleich auf der Vorder- und Rückseite des Ventilkörpers 11 genügt die Rückstellkraft der Feder 16, um den Ventilkörper 11 nach Beendigung eines Befüllungsvorganges wieder in dichtende Anlage gegen den einfüllseitigen Ventilsitz 3 zubringen. Durch eine zunehmende Entleerung des Tanks kehrt auch die Anschlageinrichtung 20 wieder in die in Figur 1 dargestellte Position zurück.

Das in dem Ausführungsbeispiel dargestellte Absperrventil ermöglicht eine schnelle und präzise Abschaltung eines Befüllungsvorganges, so daß ein automatisches Befüllen bis an die Füllstandsgrenze des Tanks ohne manuelle Nachfüllmaßnahmen erfolgen kann. Wird ein Befüllungsvorgang vorzeitig beendet, ohne daß hierbei die in Figur 3 gezeigte Stellung erreicht wird, so ist trotzdem sichergestellt, daß der Ventilkörper 11 nach der Beendigung des Befüllungsvorganges unmittelbar in die in Figur 1 gezeigte Stellung zurückkehrt, um den Tank nach außen abzudichten.

### BEZUGSZEICHENLISTE

- 1: Einfüllrohr
- 2: erster Rohrabschnitt
- 3: einfüllseitiger Ventilsitz / geneigter Wandabschnitt
- 4: erweiterte Rohrabschnitt
- 5: tankseitiger Ventilsitz / geneigter Wandabschnitt
- 6: zweiter Rohrabschnitt
- 7: Führungsnut
- 8: Anschlag der Führungsnut
- 9: Stufe
- 10: Durchgangsöffnung
- 11: Ventilkörper
- 12: Hervorwölbung
- 13: Frontende des Ventilkörpers
- 14: Ringabschnitt des Ventilkörpers
- 15: Dichtelement
- 16: Feder
- 17: Führungsabschnitt des Ventilkörpers
- 18: Abstützelement des Ventilkörpers
- 19: Abstützfläche des Ventilkörpers
- 20: Anschlageinrichtung
- 21: Anschlagvorsprung
- 22: Öffnung der Anschlageinrichtung
- 23: Ablaufausnehmung
- 24: Befestigungsabschnitt
- 25: Querachse
- 26: Schwimmkörper
- 27: Doppelgelenk-Gestänge
- 28: Betätigungstange
- X: Längsmittelachse

## Patentansprüche

1. Absperrventil für einen Tank, umfassend ein Einfüllrohr (1) mit einem einfüllseitigen Ventilsitz (3) und einem tankseitigen Ventilsitz (5), die in Durchströmrichtung des Einfüllrohres (1) voneinander beabstandet angeordnet sind, einen Ventilkörper (11) mit einem Dichtelement (15), der zwischen den Ventilsitzen (3, 5) bewegbar angeordnet ist, um je nach Stellung des Ventilkörpers (11) gegen den einen oder den anderen Ventilsitz (3, 5) anzuliegen, wobei der Ventilkörper (11) in Richtung des einfüllseitigen Ventilsitzes (3) vorgespannt ist, um in einer Ruhestellung das Einfüllrohr (1) gegen den einfüllseitigen Ventilsitz (3) abzudichten, und wobei die Vorspannung des Ventilkörpers (11) durch den Strömungsdruck eines einzufüllenden Mediums in Richtung des tankseitigen Ventilsitzes (5) überwindbar ist, und eine füllstandsgesteuerte Anschlageinrichtung (20) zum Anhalten der Bewegung des Ventilkörpers (11) in Richtung des tankseitigen Ventilsitzes (5) in einer Stellung, in welcher das Dichtelement (15) von dem einzufüllenden Medium umströmbar von den Ventilsitzen (3, 5) beabstandet gehalten ist, wobei die Anschlagwirkung der Anschlageinrichtung (20) bei Erreichen einer vorgegebenen Füllstandshöhe in dem Tank aufgehoben wird.

2. Absperrventil nach Anspruch 1, **dadurch gekennzeichnet, daß** die Ventilsitze (3, 5) an Innenwandabschnitten des Einfüllrohres (1) ausgebildet sind, deren Innenweite größer ist, als die Innenweite einer Durchströmöffnung (10) des Einfüllrohres (1).

3. Absperrventil nach Anspruch 1 oder 2, **dadurch gekennzeichnet, daß** die Ventilsitze (3, 5) als gegenüber der Durchströmrichtung geneigte Wandabschnitte ausgebildet sind.

4. Absperrventil nach einem der Ansprüche 1 bis 3, **dadurch gekennzeichnet, daß** die Außenweite des Dichtelementes (15) kleiner ist als die Innenweite eines zwischen den Ventilsitzen (3, 5) angeordneten, erweiterten Rohrabschnittes (4), jedoch größer ist, als die Innenweite der Durchströmöffnung (10) des Einfüllrohres (1).

5. Absperrventil nach einem der Ansprüche 1 bis 4, **dadurch gekennzeichnet, daß** der Ventilkörper (11) als Hohlkolben ausgebildet ist.

6. Absperrventil nach einem der Ansprüche 1 bis 5, **dadurch gekennzeichnet, daß** der Ventilkörper (11) an seiner zu dem einfüllseitigen Ventilsitz (3) weisenden Stirnseite als sich in Richtung des einfüllseitigen Ventilsitzes (3) verjüngende Auswölbung (12) ausgebildet ist.

7. Absperrventil nach einem der Ansprüche 1 bis 6, **dadurch gekennzeichnet, daß** der Ventilkörper (11) an einem Innenwandabschnitt des Einfüllrohres (1) gleitbewegbar geführt ist.

8. Absperrventil nach einem der Ansprüche 1 bis 7, **dadurch gekennzeichnet, daß** der Ventilkörper (11) über eine Feder (16) gegen die Innenwand des Einfüllrohres (1) abgestützt ist, deren Vorspannung derart eingestellt ist, daß der Ventilkörper (11) selbsttätig mit seinem Dichtelement (15) abdichtend gegen den einfüllseitigen Ventilsitz (3) gedrückt wird, die Dichtung jedoch durch den Strömungsdruck eines einzufüllenden Mediums aufhebbar ist.

9. Absperrventil nach einem der Ansprüche 1 bis 8, **dadurch gekennzeichnet, daß** der Raum zwischen den Ventilsitzen (3, 5) mit einem Abschnitt des Einfüllrohres (1) und/oder des Tanks stromab des tankseitigen Ventilsitzes (5) über eine bei Anlage des Dichtelementes (15) an den tankseitigen Ventilsitz (5) wirksame Überströmleitung verbunden ist, die eine definierte Drosselstelle für einen langsamen Druckausgleich aufweist.

10. Absperrventil nach einem der Ansprüche 1 bis 9, **dadurch gekennzeichnet, daß** die Anschlageinrichtung (20) einen verlagerbaren Anschlagvorsprung (21) zum Anhalten der Bewegung des Ventilkörpers (11) aufweist, der in einem Rohrabschnitt (6) des Einfüllrohres (1) zwischen dem tankseitigen Ventilsitz (5) und dem Tank angeordnet ist, gegen den ein Abstützelement (18) des Ventilkörpers (11) in einer angehaltenen Stellung anliegt und der mit einem Füllstandsignalgeber (26) gekoppelt ist, wobei der Anschlagvorsprung (21) in Abhängigkeit des Füllstandsignalgebers (26) bei Erreichen einer vorgegebenen Füllstandshöhe in dem Tank aus seiner Anschlagstellung bewegt wird, um einen weiteren Verschiebungsweg für das Abstützelement (18) des Ventilkörpers (11) freizugeben.

11. Absperrventil nach einem der Ansprüche 1 bis 10, **dadurch gekennzeichnet, daß** die Anschlageinrichtung (20) eine Klappe umfaßt, die um eine Achse (25) quer zu der Durchströmrichtung schwenkbar ist, und die eine Öffnung (22) aufweist, die bei einem Verlagern des Anschlagvorsprunges (21) infolge des Erreichens einer vorgegebenen Füllstandshöhe in dem Tank in die Position des Anschlagvorsprunges (21) schwenkbar ist.

12. Absperrventil nach Anspruch 10 oder 11, **dadurch gekennzeichnet, daß** die Klappe als plattenartiges Element mit einem um die Querachse (25) gebogenen Randabschnitt als Anschlagvorsprung (21) ausgebildet ist, gegen den das Abstützelement (18) des Ventilkörpers (11) an einer Abstützfläche seitlich in Anlage bringbar ist, und die Öffnung (22) an dem plattenartigen Element an den Anschlagvorsprung (21) anschließend angeordnet ist, derart, um bei einem Verschwenken des plattenartigen Elementes um die Querachse (25) in die Position der Abstützfläche zu gelangen, wobei die Öffnung (22) größer ist, als die Abstützfläche.

## Claims

1. Shut-off valve for a tank, comprising a filling tube (1) with a filling-side valve seat (3) and a tank-side valve seat (5), said seats being spaced apart from one another in the throughflow direction of the filling tube (1), also comprising a valve body (11) with a sealing element (15) which can be moved between the valve seats (3, 5) in order, depending on the position of the valve body (11), to butt against either of the valve seats (3, 5), the valve body (11) being prestressed in the directon of the filling-side valve seat (3) in order, in a rest position, to seal the filling tube (1) in relation to the filling-side valve seat (3), and it being possible for the prestressing of the valve body (11) to be overcome by the flow pressure of a medium which is to be introduced, in the direction of the tank-side valve seat (5), and further comprising a filling-level-controlled stop device (20) for stopping the movement of the valve body (11) in the direction of the tank-side valve seat (5) in a position in which the sealing element (15) is kept at a distance from the valve seats (3, 5) such that the medium which is to be introduced can flow around the same, the stop action of the stop device (20) being eliminated when a predetermined filling level in the tank is reached.

2. Shut-off valve according to Claim 1, **characterized in that** the valve seats (3, 5) are formed on inner-wall portions of the filling tube (1) of which the inner width is greater than the inner width of a throughflow opening (10) of the filling tube (1).

3. Shut-off valve according to Claim 1 or 2, **characterized in that** the valve seats (3, 5) are designed as wall portions which are inclined in relation to the throughflow direction.

4. Shut-off valve according to one of Claims 1 to 3, **characterized in that** the outer width of the sealing element (15) is smaller than the inner width of a widened tube portion (4) arranged between the valve seats (3, 5), but greater than the inner width of the throughflow opening (10) of the filling tube (1).

5. Shut-off valve according to one of Claims 1 to 4, **characterized in that** the valve body (11) is designed as a hollow piston.

6. Shut-off valve according to one of Claims 1 to 5, **characterized in that**, on its end side which is oriented toward the filling-side valve seat (3), the valve body (11) is designed as a convexity (12) which tapers in the direction of the filling-side valve seat (3).

7. Shut-off valve according to one of Claims 1 to 6, **characterized in that** the valve body (11) is guided with sliding action on an inner-wall portion of the filling tube (1).

8. Shut-off valve according to one of Claims 1 to 7, **characterized in that** the valve body (11) is supported against the inner wall of the filling tube (1) via a spring (16), of which the prestressing is set such that the valve body (11) is automatically pressed with sealing action, by way of its sealing element (15), against the filling-side valve seat (3), but the sealing can be eliminated by the flow pressure of a medium which is to be filled in.

9. Shut-off valve according to one of Claims 1 to 8, **characterized in that** the region between the valve seats (3, 5) is connected to a portion of the filling tube (1) and/or of the tank downstream of the tank-side valve seat (5) via an overflow line which takes effect when the sealing element (15) butts against the tank-side valve seat (5) and has a defined throttle location for slow pressure equalization.

10. Shut-off valve according to one of Claims 1 to 9, **characterized in that** the stop device (20) has a displaceable stop protrusion (21) which is intended for stopping the movement of the valve body (11), which is arranged in a tube portion (6) of the filling tube (1) between the tank-side valve seat (5) and the tank, against which a supporting element (18) of the valve body (11) butts in a stopped position, and which is coupled to a filling-level signalling device (26), it being the case that in dependence on the filling-level signalling device (26), when a predetermined filling level in the tank is reached, the stop protrusion (21) is moved out of its stop position in order to release a further displacement path for the supporting element (18) of the valve body (11).

11. Shut-off valve according to one of Claims 1 to 10, **characterized in that** the stop device (20) comprises a flap which can be pivoted about a pin (25) in the direction transverse to the throughflow direction and which has an opening (22) which upon displacement of the stop protrusion (21), as a result of a predetermined filling level in the tank being reached, can be pivoted into the position of the stop protrusion (21).

12. Shut-off valve according to Claim 10 or 11, **characterized in that** the flap is designed as a plate-like element with a border portion which is bent about the transverse pin (25) as stop protrusion (21), against a supporting surface of which the supporting element (18) of the valve body (11) can be brought into lateral abutment, and the opening (22) on the plate-like element is arranged such that it adjoins the stop protrusion (21), in order to pass into the position of the supporting surface when the plate-like element is pivoted about the transverse pin (25), the opening (22) being larger than the supporting surface.

## Revendications

1. Soupape d'arrêt d'un réservoir, comprenant un tube de remplissage (1) avec un siège de soupape (3) du côté du remplissage et un siège de soupape (5) du côté du réservoir, lesquels sont disposés dans la direction de l'écoulement du tube de remplissage (1) de manière espacés l'un de l'autre, un corps de soupape (11) avec un élément d'étanchéité (15), qui est disposé mobile entre les sièges de soupape (3, 5), afin de s'appliquer en fonction de la position du corps de soupape (11) contre l'un ou l'autre siège de soupape (3, 5), le corps de soupape (11) étant précontraint dans la direction du siège de soupape (3) du côté du remplissage, afin de réaliser l'étanchéité, dans une position de repos, du tube de remplissage (1) contre le siège de soupape (3) du côté du remplissage, et la précontrainte du corps de soupape (11) pouvant être surmontée par la pression d'écoulement d'un fluide à introduire dans la direction du siège de soupape (5) du côté du réservoir, et un dispositif de butée (20) commandé par le niveau de remplissage pour arrêter le mouvement du corps de soupape (11) dans la direction du siège de soupape (5) du côté du réservoir dans une position dans laquelle l'élément d'étanchéité (15) pouvant être parcouru par le fluide à introduire est maintenu espacé des sièges de soupape (3, 5), l'effet de butée du dispositif de butée (20) étant supprimé à l'obtention d'une hauteur de niveau de remplissage prédéfinie dans le réservoir.

2. Soupape d'arrêt selon la revendication 1, **caractérisée en ce que** les sièges de soupape (3, 5) sont réalisés sur des portions de paroi interne du tube de remplissage (1), dont la largeur interne est supérieure à la largeur interne d'une ouverture d'écoulement (10) du tube de remplissage (1).

3. Soupape d'arrêt selon la revendication 1 ou 2, **caractérisée en ce que** les sièges de soupape (3, 5) sont réalisés sous forme de portions de paroi inclinées par rapport à la direction d'écoulement.

4. Soupape d'arrêt selon l'une quelconque des revendications 1 à 3, **caractérisée en ce que** la largeur extérieur de l'élément d'étanchéité (15) est inférieure à la largeur intérieure d'une portion de tube (4) élargie, disposée entre les sièges de soupape (3, 5), mais est supérieure à la largeur intérieure de l'ouverture d'écoulement (10) du tube de remplissage (1).

5. Soupape d'arrêt selon l'une quelconque des revendications 1 à 4, **caractérisée en ce que** le corps de soupape (11) est réalisé sous forme de piston creux.

6. Soupape d'arrêt selon l'une quelconque des revendications 1 à 5, **caractérisée en ce que** le corps de soupape (11) est réalisé, au niveau de son côté frontal tourné vers le siège de soupape (3) du côté du remplissage sous forme d'un renflement (12) se rétrécissant dans la direction du siège de soupape (3) du côté du remplissage.

7. Soupape d'arrêt selon l'une quelconque des revendications 1 à 6, **caractérisée en ce que** le corps de soupape (11) est guidé de manière à pouvoir coulisser sur une portion de paroi interne du tube de remplissage (1).

8. Soupape d'arrêt selon l'une quelconque des revendications 1 à 7, **caractérisée en ce que** le corps de soupape (11) est supporté par le biais d'un ressort (16) contre la paroi interne du tube de remplissage (1), dont la précontrainte est ajustée de telle sorte que le corps de soupape (11) soit pressé automatiquement avec son élément d'étanchéité (15) de manière étanche contre le siège de soupape (3) du côté de remplissage, l'étanchéité pouvant toutefois être supprimée par la pression d'écoulement d'un fluide à introduire.

9. Soupape d'arrêt selon l'une quelconque des revendications 1 à 8, **caractérisée en ce que** l'espace entre les sièges de soupape (3, 5) est connecté à une portion du tube de remplissage (1) et/ou du réservoir en aval du siège de soupape (5) du côté du réservoir par le biais d'une conduite de débordement agissant lors de l'application de l'élément d'étanchéité (15) contre le siège de soupape (5) du côté du réservoir, laquelle présente un point d'étranglement défini pour une compensation lente de la pression.

10. Soupape d'arrêt selon l'une quelconque des revendications 1 à 9, **caractérisée en ce que** le dispositif de butée (20) présente une saillie de butée déplaçable (21) pour arrêter le mouvement du corps de soupape (11), qui est disposée dans une portion tubulaire (6) du tube de remplissage (1) entre le siège de soupape (5) du côté du réservoir et le réservoir, contre laquelle un élément de support (18) du corps de soupape (11) vient s'appliquer dans une position arrêtée et qui est accouplée à un générateur de signaux de niveau de remplissage (26), la saillie de butée (21) étant déplacée hors de sa position de butée lorsqu'une hauteur de niveau de remplissage prédéfinie dans le réservoir a été atteinte, afin de libérer une autre course de déplacement pour l'élément de support (18) du corps de soupape (11).

11. Soupape d'arrêt selon l'une quelconque des revendications 1 à 10, **caractérisée en ce que** le dispositif de butée (20) comprend un clapet qui peut pivoter autour d'un axe (25) transversalement à la direction d'écoulement, et qui présente une ouverture (22) qui peut pivoter dans la position de la saillie de butée (21) lors d'un décalage de la saillie de butée (21) suite à l'obtention d'une hauteur de niveau de remplissage prédéfinie dans le réservoir.

12. Soupape d'arrêt selon la revendication 10 ou 11, **caractérisée en ce que** le clapet est réalisé en tant qu'élément de type plaque avec une portion de bord cintrée autour de l'axe transversal (25) en tant que saillie de butée (21), contre laquelle l'élément de support (18) du corps de soupape (11) peut être amené en butée latéralement contre une face de support, et l'ouverture (22) est ensuite disposée contre l'élément de type plaque contre la saillie de butée (21) de manière à parvenir dans la position de la face de support lors d'un pivotement de l'élément de type plaque autour de l'axe transversal (25), l'ouverture (22) étant supérieure à la face de support.
